# EUROPÄISCHE PATENTSCHRIFT

(11) **EP 1 624 235 B1**
(45) Veröffentlichungstag und Bekanntmachung des Hinweises auf die Patenterteilung: **14.09.2011**
(21) Anmeldenummer: 05014908.7
(22) Anmeldetag: 09.07.2005
(51) Int. Cl.: F16K 37/00

(54) **Manuell zu betätigende Armatur mit einem Signalgerät**
Manually actuated valve with an indicator
Robinet commandé manuellement avec un indicateur

(30) Priorität: 07.08.2004 DE 202004012414 U
(43) Veröffentlichungstag der Anmeldung: 08.02.2006
(73) Patentinhaber: Air Torque GmbH, 76275 Ettlingen (DE)
(72) Erfinder: Peters, Heinz, 76275 Ettlingen (DE)
(74) Vertreter: Lemcke, Brommer & Partner

(56) Entgegenhaltungen:
- WO-A-89/05938
- WO-A-2004/008012
- US-A- 5 623 963

## Beschreibung

Die Erfindung betrifft eine Armatur (wie einen Kugelhahn oder eine Klappe) mit einem Wellenzapfen zu deren schwenkenden Betätigung und mit einem dem Wellenzapfen zugeordneten Flansch, der ein erstes Lochbild aufweist zur Befestigung eines auf den Wellenzapfen wirkenden Stellantriebes.

Armaturen, wie insbesondere Kugelhähne oder Klappen der angesprochenen Art finden sich in verschiedensten Anlagen, wo mit verstellbaren Querschnittsverengungen ein Stoffstrom gedrosselt bzw. abgesperrt werden soll.

Häufig werden solche Armaturen, insbesondere in automatisch betriebenen Anlagen, durch einen Stellantrieb betätigt, der durch Stellkraft und Stellweg diese Querschnittsverengungen bewirkt. Zur Befestigung des Stellantriebes an der Armatur sind normmäßig bestimmte Lochbilder vorgeschrieben. Manche Armaturen weisen auch mehrere solcher Lochbilder oder aber, wie z.B. in der EP-A-1 031 778 vorgeschlagen, spezielle Lochbilder mit tropfenförmigen Langlöchern zur alternativen Befestigung unterschiedlicher Stellantriebe auf, die im Rahmen der hier beschriebenen Erfindung aber unter der Bezeichnung "erstes Lochbild" zusammengefasst werden.

Die auf den Armaturen befestigten Stellantriebe werden üblicherweise in bekannter Weise fernbetätigt. Es ist dabei auch bekannt, die sich daraus ergebende Stellung der Armatur an eine zentrale Überwachungsstelle zu melden.

Hierzu ist an dem Stellantrieb üblicherweise ein entsprechendes Signalgerät zu befestigen, wobei die diesbezüglichen Befestigungsbilder, mit denen ein solches Signalgerät an einem Stellantrieb zu befestigen ist, in einer entsprechenden Norm festgelegt werden (VDI/VDE3845, DIN 3337, NAMUR oder Entwurf für EN-ISO 5211).

In vielen Anlagen finden sich aber auch Armaturen, die rein manuell zu betätigen sind. Bei diesen besteht die Problematik, dass bei deren Betätigung eine Anlage in einen Zustand gebracht werden kann, der in der für solche Anlagen üblichen zentralen Überwachungsstelle bei der bisher bekannten Fernüberwachung nicht nachzuvollziehen oder zu kontrollieren ist.

Um diese Problematik zu überwinden ist es bekannt, direkt an solchen Armaturen Signalgeräte zu befestigen, wie sie üblicherweise nur an derartige Armaturen betätigende Stell- oder Schwenkantriebe angebracht werden. Dies führt aber zu erheblichen Problemen, da für die Befestigung von entsprechenden Signalaufnehmern bzw. Signalgeräten an Stellantrieben andere Normen gelten als für die Befestigung der genannten Stellantriebe an der Armatur.

Aufgabe der vorliegenden Erfindung ist es unter diesem Aspekt, eine Armatur wie oben beschrieben derart weiterzubilden, dass für sie eine Rückmeldung an eine Fernüberwachung auch bei einer manuellen Betätigung schnell und unproblematisch zu ermöglichen ist.

Diese Aufgabe wird erfindungsgemäß dadurch gelöst, dass der bei solchen Armaturen vorgesehene Flansch, der ein übliches Lochbild zur Befestigung eines Stellantriebes (nach EN-ISO 5211) aufweist, mit einem weiteren Normlochbild versehen ist, das normgemäß zur Befestigung eines Signalgerätes vorgesehen ist, mit dem ein die Stellung des Wellenzapfens und damit den Zustand der Armatur wiedergebendes Signal abzugeben ist. Dieses weitere Lochbild ist an einer Verlängerung des Flansches vorgesehen.

Die Erfindung hat den Vorteil, dass bei einer entsprechenden Armatur nun die Signalgeräte, wie sie bisher nur bei Schwenk- oder Stellantrieben üblich sind, nun auch direkt an der Armatur befestigt werden können, ohne dass hierzu aufwändig spezielle Adapter gebaut werden müssten.

Obwohl der Wellenzapfen der erfindungsgemäßen Armatur häufig nur während der aktuellen Verstellung mit einem Handgriff versehen wird, ist es auch im Rahmen der Erfindung, wenn ein Handgriff dauerhaft an dem Wellenzapfen befestigt ist. Ein solcher Handgriff, der oft auch standardmäßig ab Werk mitgeliefert wird, kann nämlich auch als optisches Signal wirken, das direkt an der Armatur montiert ist.

Vorzugsweise hat der Wellenzapfen einer erfindungsgemäßen Armatur an seiner Stirnseite ein Befestigungselement, über das ein entsprechender Signalgeber rotationsfest mit ihm gekoppelt ist. Bei diesem Befestigungselement kann es sich insbesondere auch um einen in der Stirnseite des Wellenzapfens ausgeformten Längsschlitz handeln, der normmäßig normalerweise nur bei Stellantrieben etc. für derartige Armaturen vorgeschlagen wird. Durch eine derartige Nut wird die Verwendung von Signalgeräten, wie sie bisher im Wesentlichen nur für Stellelemente verwandt werden, weiter erleichtert.

Bei einer Ausführungsform der erfindungsgemäßen Armatur ist der Flansch, der das übliche erste Lochbild zur Befestigung eines Stellantriebes trägt, lediglich einseitig mit einer Verlängerung versehen, an der das weitere Normlochbild zur Befestigung eines Signalgerätes angebracht ist. Eine derartige einseitige Verlängerung ist dabei insbesondere preiswert herstellbar.

Insbesondere wird hierzu vorgeschlagen, den Flansch und die Verlängerung einstückig auszubilden und direkt an das Gehäuse der Armatur anzuformen.

Um eine möglichst große Variabilität der erfindungsgemäßen Armatur zu gewährleisten, wird insbesondere vorgeschlagen, das erste Lochbild zur Befestigung eines Stellantriebes und das weitere Normlochbild zur alternativen Befestigung eines Signalgerätes in einer Ebene liegend auszubilden.

Weitere Vorteile und Merkmale der Erfindung ergeben sich aus der nachfolgenden Beschreibung eines Ausführungsbeispiels. Dabei zeigt
- Figur 1: den Schnitt durch eine erfindungsgemäße Armatur;
- Figur 2: die Aufsicht auf den Flansch einer erfindungsgemäßen Armatur gemäß Figur 1 mit darauf befestigtem S.ignalgerät;
- Figur 3: die Seitenansicht eines Flansches einer erfindungsgemäßen Armatur mit einer Konsole zur Montage eines alternativen Signalgerätes;
- Figur 4: die Aufsicht auf einen Flansch gemäß Figur 3.

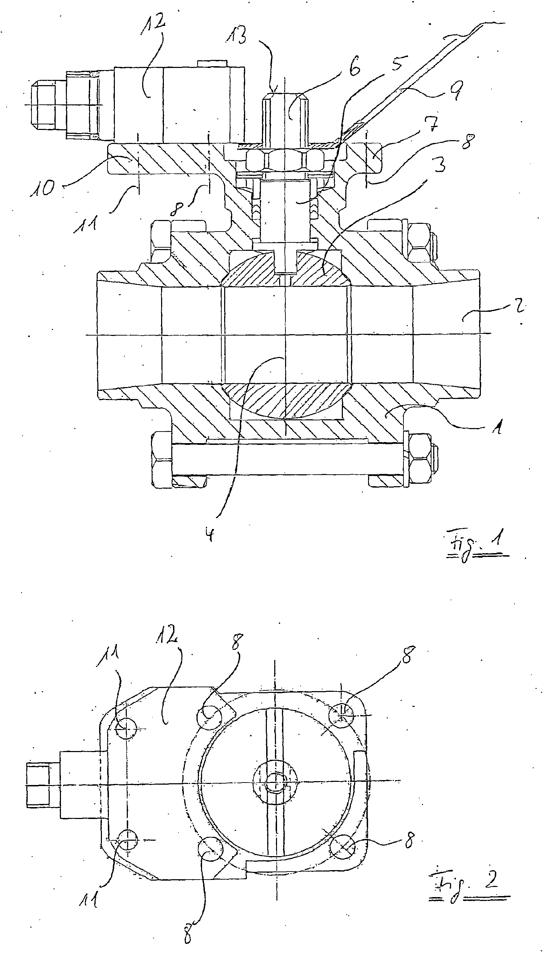

In Figur 1 erkennt man den Schnitt durch eine Armatur, wobei es sich im hier dargestellten Beispiel um ein Kugelventil handelt. Es sei der guten Ordnung halber darauf hingewiesen, dass die Erfindung aber auch bei entsprechenden Klappen verwandt werden kann, was hier aus Vereinfachungsgründen nicht dargestellt wird, insbesondere, da die erfindungsfunktionelle Weiterbildung unabhängig von der Art der Armatur ist.

Im Gehäuse 1 dieses Kugelventils ist eine rohrförmige Durchgangsöffnung 2 vorgesehen, in deren mittlerem Bereich ein Verschlusskörper 3 angeordnet ist, der um seine Hochachse 4 zu verdrehen ist. Bei einer entsprechenden Verdrehung verschließt er dabei den freien Durchtritt der Durchgangsöffnung 2.

Die Betätigung des Verschlusskörpers 3 erfolgt über eine Welle 5, die achsparallel zur Hochachse 4 verläuft und mit einem Wellenzapfen 6 aus dem Gehäuse 1 der Armatur, d.h. im hier dargestellten Beispiel dem Kugelventil herausragt.

Wenn die hier dargestellte Armatur in eine größere Anlage integriert wird, kann sie fernbetätigt werden, wozu an dem Wellenzapfen 6 ein (hier nicht dargestellter) Stellantrieb anzubringen ist. Zu dessen Befestigung ist normmäßig ein Flansch 7 vorgesehen, an dem eine Mehrzahl von gleichmäßig um den Wellenzapfen 6 herum verteilten, in der Figur 2 zu erkennenden Löchern 8 vorgesehen ist, die damit ein erstes Lochbild am Flansch 7 darstellen.

Anstelle eines wie oben beschriebenen Stellantriebes ist im hier dargestellten Beispiel aber ein manuell zu betätigender Handgriff 9 an dem Wellenzapfen 6 befestigt, durch den der Verschlusskörper 3 manuell um seine Hochachse 4 zu verdrehen ist, womit die Armatur gedrosselt oder geschlossen werden kann.

Um die derart manuell erzeugte Stellung der Armatur erfassen zu können, ist im hier dargestellten Beispiel der Flansch 7 in der Figur 1 nach links mit einer Verlängerung 10 versehen. Diese weist zwei weitere Bohrungen 11 auf, an denen ein Signalgerät 12 befestigt ist. Die Bohrungen 11 entsprechen einem Normlochbild zur Befestigung von Signalgeräten an Stellantrieben. Mit dem genannten Signalgerät kann nun an eine Steuerzentrale ein Signal geliefert werden in Abhängigkeit der manuell veränderten Stellung der Armatur.

Das Signalgerät 12 arbeitet dabei mit einem auf dem Wellenzapfen 6 aufzunehmenden Signalgeber zusammen, der an diesem rotationsfest angebracht ist, insbesondere durch an dem Wellenzapfen 6 vorhandene flach ausgebildete Seiten oder eine in dessen Stirnseite 13 eingebrachte Nut.

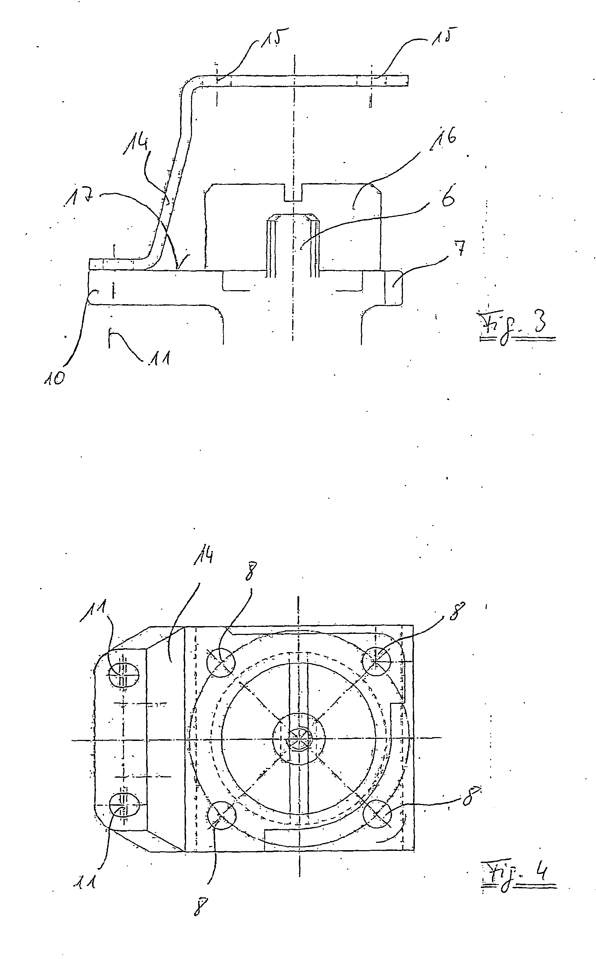

Ein entsprechender Adapter für ein alternatives Signalgerät ist in Figur 3 dargestellt, wobei sich die hier dargestellte Variante eines Flansches 7 dadurch unterscheidet, dass eine Konsole 14 über die Bohrungen 11 an der Verlängerung 10 des Flansches 7 montiert ist, die den Wellenzapfen 6 überragt. In dieser Konsole sind dann wieder Öffnungen 15 vorgesehen, mit denen ein übliches Signalgerät an der Konsole 14 zu befestigen ist, das dann über den Adapter 16 die Stellung des Wellenzapfens 6 aufnimmt und damit ein Signal liefern kann bezüglich des Zustands der Armatur.

Der Vorteil der Erfindung liegt insbesondere darin, dass an dem hier vorgesehenen Flansch 7 aufgrund der bei ihm vorgesehenen Verlängerung 10 mit den dort zusätzlich vorhandenen Bohrungen 11 des Normlochbildes, die in einer gleichen Ebene 17 liegen, dieselbe Armatur sowohl für einen üblichen Stellantrieb verwandt werden kann als auch für eine manuelle Betätigung mit einem dann direkt am Flansch angebrachten Signalgerät, mit dem eine Stellungsmeldung an eine Steuer- und Kontrollzentrale geliefert werden kann.

## Patentansprüche

1. Armatur mit einem Wellenzapfen (6) zu deren schwenkender Betätigung und einem dem Wellenzapfen (6) zugeordneten Flansch (7), der ein erstes Lochbild (8) aufweist zur Befestigung eines auf den Wellenzapfen (6) wirkenden Stellantriebs,
**dadurch gekennzeichnet,**
**dass** der Flansch (7) wenigstes ein weiteres Normlochbild (11) aufweist zur Befestigung eines Signalgerätes (12) zur Aufnahme der Stellung des Wellenzapfens (6), wobei der Flansch (7) einseitig eine Verlängerung (10) hat, an der das weitere Normlochbild (11) angebracht ist.

2. Armatur gemäß Anspruch 1,
**dadurch gekennzeichnet,**
**dass** an dem Wellenzapfen (6) ein Handgriff (9) befestigt ist.

3. Armatur gemäß Anspruch 1,
**dadurch gekennzeichnet,**
**dass** der Wellenzapfen (6) an seiner Stirnseite (13) ein Befestigungselement aufweist zur rotationsfesten Kopplung mit einem Stellungsgeber (16).

4. Armatur gemäß Anspruch 1
**dadurch gekennzeichnet,**
**dass** der Flansch (7) mit der Verlängerung (10) einstückig ausgebildet und an das Gehäuse (1) der Armatur angeformt ist.

5. Armatur gemäß Anspruch 1
**dadurch gekennzeichnet,**
**dass** das erste Lochbild (8) und das weitere Normlochbild (11) in einer Ebene (17) liegen.

## Claims

1. Valve having a journal (6) for the pivoting operation thereof and having a flange (7) associated with the journal (6), which flange has a first hole pattern (8) for attachment of an actuator acting on the journal (6),
**characterised in that**
the flange (7) has at least one further standard hole pattern (11) for attachment of a signal device (12) for reception of the position of the journal (6), the flange (7) having on one side an extension (10) on which the further standard hole pattern (11) is provided.

2. Valve according to claim 1,
**characterised in that**
a handle (9) is attached to the journal (6).

3. Valve according to claim 1,
**characterised in that**
the journal (6) has on its end face (13) an attachment element for non-rotatable coupling to a position indicator (16).

4. Valve according to claim 1,
**characterised in that**
the flange (7) is made in one piece with the extension (10) and is formed integrally with the housing (1) of the valve.

5. Valve according to claim 1,
**characterised in that**
the first hole pattern (8) and the further standard hole pattern (11) lie in one plane (17).

## Revendications

1. Appareil de robinetterie, avec un tourillon d'arbre (6) pour son actionnement par pivotement, et avec une bride (7) qui est associée au tourillon d'arbre (6) et qui présente une première configuration de trous (8) pour la fixation d'un actionneur agissant sur le tourillon d'arbre (6),
**caractérisé en ce que** la bride (7) présente au moins une configuration supplémentaire de trous normalisée (11) pour la fixation d'un appareil de signalisation (12) pour relever la position du tourillon d'arbre (6), sachant que la bride (7) possède d'un côté un prolongement (10) sur lequel est disposée la configuration supplémentaire de trous (11).

2. Appareil de robinetterie selon la revendication 1, **caractérisé en ce qu'**une poignée (9) est fixée sur le tourillon d'arbre (6).

3. Appareil de robinetterie selon la revendication 1, **caractérisé en ce que** le tourillon d'arbre (6) présente sur son côté frontal (13) un élément de fixation pour l'accouplement bloqué en rotation à un transmetteur de position (16).

4. Appareil de robinetterie selon la revendication 1, **caractérisé en ce que** la bride (7) est réalisée d'un seul tenant avec le prolongement (10) et est formée sur le corps (1) de l'appareil de robinetterie.

5. Appareil de robinetterie selon la revendication 1, **caractérisé en ce que** la première configuration de trous (8) et la configuration supplémentaire de trous (11) se situent dans un même plan (17).
